# EUROPEAN PATENT APPLICATION

(11) **EP 2 597 910 A1**
(43) Date of publication of application: **29.05.2013**
(21) Application number: 11809644.5
(22) Date of filing: 19.07.2011
(51) Int. Cl.: H04W 36/30, H04W 84/00

(54) **WIRELESS COMMUNICATION SYSTEM, RADIO RELAY STATION, RADIO TERMINAL, AND COMMUNICATION CONTROL METHOD**

(30) Priority: 20.07.2010 JP 2010163413
(71) Applicant: Kyocera Corporation, Kyoto-shi Kyoto 612-8501 (JP)
(72) Inventor: FUKUTA, Noriyoshi, Kyoto-shi Kyoto 612-8501 (JP)
(74) Representative: Schwabe - Sandmair - Marx
(86) International application number: PCT/JP2011/066381
(87) International publication number: WO 2012/011474

(57) **Abstract**

A relay node (RN), which is configured to be able to move, comprises a handover controller (233) that performs a control to prevent the connection destination of a radio terminal (UE) from being switched from the relay node (RN) to another one if, after the radio terminal (UE) is connected to the relay node (RN), the variation amount of RSRP_{RN} for the radio signals received by the radio terminal (UE) from therelaynode (RN) is within a predetermined range and further the RSRQ_{RN} for the radio signals received by the radio terminal (UE) from a plurality of cells including the relay node (RN) is better than a predetermined level.

## Description

### TECHNICAL FIELD

The present invention relates to a radio communication system, a radio relay station, a radio terminal, and a communication control method adopting relay transmission.

### BACKGROUND ART

The LTE (Long Term Evolution) under standardization by the 3GPP (3rd Generation Partnership Project), which is a standardization organization for radio communication systems, is a next-generation radio communication system that realizes faster communication than the 3rd and 3.5th generation radio communication systems currently in operation.

In the LTE Advanced which is advanced architecture of the LTE, adoption of relay transmission is anticipated by using a stationary or movable radio relay station called a relay node (see Non-patent Document 1, for example).

A radio relay station is a relay base station wirelessly connected to a radio base station. For instance, a radio relay station configured to be movable is mounted on a transportation vehicle such as a train or a bus, and a radio terminal located in the transportation vehicle establishes connection to the radio relay station and thus can perform communication in a better condition than in the case of connection to a radio base station.

During moving or the like, the radio terminal executes processing for switching a connection destination to a cell having a better radio condition than that of a current connection destination. The cell means a range of coverage of a radio wave emitted from a radio communication device for performing radio communication with the radio terminal. Such a cell is formed by the radio base station or the radio relay station.

The processing for switching the connection destination cell is referred to as "handover" in the state where the radio terminal is executing communication (i.e., an active state) or as "cell reselection" in the state where the radio terminal is standing by (i.e., an idle state).

### PRIOR ART DOCUMENT

### NON-PATENT DOCUMENT

Non-patent Document 1: 3GPP TS 36.300 V10.0.0 (2010-6), "4.7 Support for relaying"

### SUMMARY OF THE INVENTION

The radio terminal located in the transportation vehicle and connected to the radio relay station installed in the transportation vehicle moves along with movement of the transportation vehicle. Here, when the transportation vehicle passes by a cell having large transmission power, the radio terminal may switch the connection destination to the cell and then switch the connection destination again from the cell back to the radio relay station immediately afterwards.

In the above-described case where the radio terminal moving together with the radio relay station switches the connection destination from the radio relay station and soon switches the connection destination back to the radio relay station, the switching processing from the radio relay station to the cell is unnecessary as a consequence. Since the switching processing increases a traffic load and a processing load associated with exchange of control messages, it is not desirable to cause such unnecessary switching.

In view of the above, an objective of the present invention is to provide a radio communication system, a radio relay station, a radio terminal, and a communication control method, which are capable of suppressing occurrence of unnecessary processing for switching a connection destination.

The present invention has following features in order to solve the aforementioned problems. First, a feature of a radio communication system according to the present invention is summarized as a radio communication system (radio communication system 1) provided with a radio relay station (relay node RN) configured to be movable, and a radio terminal (radio terminal UE) to be connected to the radio relay station, the system comprising: a controller (handover controller 233, report controller 123, or cell reselection controller 125) that, after the radio terminal is connected to the radio relay station, performs control to withhold switching of a connection destination of the radio terminal from the radio relay station when an amount of change in a first radio quality level (RSRP_{RN}) for a radio signal received by the radio terminal from the radio relay station is within a predetermined range and when a second radio quality level (RSRQ_{RN}) for radio signals received by the radio terminal from a plurality of cells inclusive of the radio relay station is better than a predetermined level.

Here, the case where the amount of change in the first radio quality level for the radio signal received by the radio terminal from the radio relay station is within the predetermined range can be regarded as a situation where a propagation environment between the radio relay station configured to be movable and the radio terminal does not change materially, i.e., a situation where the radio terminal is moving together with the radio relay station.

Meanwhile, when the second radio quality level for the radio signals received by the radio terminal from the multiple cells inclusive of the radio relay station is better than the predetermined level, the radio terminal can be regarded as being capable of performing communication successfully with the radio relay station.

In addition, when the amount of change in the first radio quality level is within the predetermined range and when the second radio quality level is better than the predetermined level, occurrence of unnecessary processing for switching a connection destination can be suppressed by performing such control as to withhold switching of the connection destination of the radio terminal from the radio relay station.

Another feature of a radio communication system according to the present invention is, in the radio communication system according to the aforementioned feature, summarized as follows. The radio terminal comprises: a measurement unit (measurement unit 121) that measures the first radio quality level, the second radio quality level, and a third radio quality level (RSRP_{eNB}) for a radio signal received by the radio terminal from a neighboring cell (e.g. radio base station eNB#2) of the radio relay station; and a report transmitter (measurement report generator 122, radio communication unit 110) that transmits a report (Measurement Report) of a measurement result by the measurement unit to the radio relay station, the radio relay station comprises: a report receiver (terminal radio communication unit 210) that receives the report of the measurement result from the radio terminal; a request transmitter (request generator 234, base station radio communication unit 220) that transmits, to the neighboring cell, a request message (Handover Request) for changing the connection destination of the radio terminal when the third radio quality level is better than the first radio quality level; and the controller (handover controller 233), wherein when the amount of change in the first radio quality level is within the predetermined range and when the second radio quality level is better than the predetermined level, the controller controls the request transmitter so that the request transmitter withholds transmission of the request message even though the third radio quality level is better than the first radio quality level.

Another feature of a radio communication system according to the present invention is, in the radio communication system according to the a forementioned feature, summarized as follows. The radio terminal comprises: a measurement unit (measurement unit 121) that measures the first radio quality level, the second radio quality level, and a third radio quality level (RSRP_{eNB}) for a radio signal received by the radio terminal from a neighboring cell (e.g. radio base station eNB#2) of the radio relay station; a report transmitter (measurement report generator 122, radio communication unit 110) that transmits a report (Measurement Report) of a measurement result by the measurement unit to the radio relay station; and the controller (report controller 123), the radio relay station comprises: a report receiver (terminal radio communication unit 210) that receives the report of the measurement result from the radio terminal; and a request transmitter (request generator 234, base station radio communication unit 220) that transmits, to the neighboring cell, a request message (Handover Request) for changing the connection destination of the radio terminal when the third radio quality level is better than the first radio quality level, wherein when the amount of change in the first radio quality level is within the predetermined range and when the second radio quality level is better than the predetermined level, the controller controls the report transmitter so that the report transmitter withholds reporting of the third radio quality level to the radio relay station.

Another feature of a radio communication system according to the present invention is, in the radio communication system according to the aforementioned feature, summarized as follows. The radio terminal comprises: a measurement unit (measurement unit 121) that measures the first radio quality level, the second radio quality level, and a third radio quality level (RSRP_{eNB}) for a radio signal received by the radio terminal from a neighboring cell (e.g. radio base station eNB#2) of the radio relay station; a report transmitter (measurement report generator 122, radio communication unit 110) that transmits a report (Measurement Report) of a measurement result by the measurement unit to the radio relay station; and the controller (report controller 123), the radio relay station comprises: a report receiver (terminal radio communication unit 210) that receives the report of the measurement result from the radio terminal; and a request transmitter (request generator 234, base station radio communication unit 220) that transmits, to the neighboring cell, a request message (Handover Request) for changing the connection destination of the radio terminal when the third radio quality level is better than the first radio quality level, wherein when the amount of change in the first radio quality level is within the predetermined range and when the second radio quality level is better than the predetermined level, the controller controls the report transmitter so that the report transmitter issues the report to the radio relay station after performing correction to lower the third radio quality level relative to the first radio quality level.

Another feature of a radio communication system according to the present invention is, in the radio communication system according to the aforementioned feature, summarized as follows. The radio terminal comprises: a measurement unit (measurement unit 121) that measures the first radio quality level, the second radio quality level, and a third radio quality level (RSRP_{eNB}) for a radio signal received by the radio terminal from a neighboring cell (e.g. radio base station eNB#2) of the radio relay station; a cell reselector (cell reselector 124) that selects the neighboring cell as a new connection destination of the radio terminal when the third radio quality level is better than the first radio quality level; and the controller (cell reselection controller 125), wherein when the amount of change in the first radio quality level is within the predetermined range and when the second radio quality level is better than the predetermined level, the controller controls the cell reselector so that the cell reselector withholds selection of the neighboring cell as the new connection destination of the radio terminal even though the third radio quality level is better than the first radio quality level.

Another feature of a radio communication system according to the present invention is, in the radio communication system according to the a forementioned feature, summarized as follows. The first radio quality level is a reception power level of the radio signal received by the radio terminal from the radio relay station, and the amount of change in the first radio quality level is a difference between the first radio quality level (RSRP¹_{RN}) measured by the measurement unit at a first time point and the first radio quality level (RSRP²_{RN}) measured by the measurement unit at a second time point later than the first time point.

Another feature of a radio communication system according to the present invention is, in the radio communication system according to the aforementioned feature, summarized as follows. The second radio quality level is a ratio of a reception power level of the radio signal received by the radio terminal from the radio relay station to a reception power level of a radio signal received by the radio terminal from a neighboring cell of the radio relay station, and a condition of the second radio quality level being better than the predetermined level is that the second radio quality level is higher than the predetermine level.

Another feature of a radio communication system according to the present invention is, in the radio communication system according to the aforementioned feature, summarized as follows. The second radio quality level is an interference noise power level indicating reception power of a radio signal received by the radio terminal from a neighboring cell of the radio relay station, and a condition of the second radio quality level being better than the predetermined level is that the second radio quality level is lower than the predetermine level.

A feature of a radio relay station according to the present invention is summarized as a radio relay station (relay node RN) configured to be movable, comprising: a controller (handover controller 233) that, after a radio terminal (radio terminal UE) is connected to the radio relay station, performs control to withhold switching of a connection destination of the radio terminal from the radio relay station when an amount of change in a first radio quality level (RSRP_{RN}) for a radio signal received by the radio terminal from the station is within a predetermined range and when a second radio quality level (RSRQ_{RN}) for radio signals received by the radio terminal from a plurality of cells inclusive of the station is better than a predetermined level.

Another feature of a radio relay station according to the present invention is, in the radio relay station according to the aforementioned feature, summarized as follows. The radio relay station further comprises: a report receiver (terminal radio communication unit 210) that receives a report (Measurement Report) from the radio terminal, the report including the first radio quality level, the second radio quality level, and a third radio quality level (RSRP_{eNB}) for a radio signal received by the radio terminal from a neighboring cell (e.g. radio base station eNB#2) of the station; and a request transmitter (request generator 234, base station radio communication unit 220) that transmits, to the neighboring cell, a request message (Handover Request) for changing the connection destination of the radio terminal when the third radio quality level is better than the first radio quality level, wherein when the amount of change in the first radio quality level is within the predetermined range and when the second radio quality level is better than the predetermined level, the controller controls the request transmitter so that the request transmitter withholds transmission of the request message even though the third radio quality level is better than the first radio quality level.

A feature of a radio terminal according to the present invention is summarized as a radio terminal (radio terminal UE) to be connected to a radio relay station (relay node RN) configured to be movable, comprising: a controller (report controller 123 or cell reselector 124) that, after the radio terminal is connected to the radio relay station, performs control to withhold switching of a connection destination of the radio terminal from the radio relay station when an amount of change in a first radio quality level (RSRP_{RN}) for a radio signal received by the radio terminal from the radio relay station is within a predetermined range and when a second radio quality level (RSRQ_{RN}) for radio signals received by the radio terminal from a plurality of cells inclusive of the radio relay station is better than a predetermined level.

Another feature of a radio terminal according to the present invention is, in the radio terminal according to the aforementioned feature, summarized as follows. The radio terminal further comprises: a measurement unit (measurement unit 121) that measures the first radio quality level, the second radio quality level, and a third radio quality level (RSRP_{eNB}) for a radio signal received by the radio terminal from a neighboring cell of (e.g. radio base station eNB#2) the radio relay station; and a report transmitter (measurement report generator 122, radio communication unit 110) that transmits a report (Measurement Report) of a measurement result by the measurement unit to the radio relay station, wherein when the amount of change in the first radio quality level is within the predetermined range and when the second radio quality level is better than the predetermined level, the controller controls the report transmitter so that the report transmitter withholds reporting of the third radio quality level to the radio relay station.

Another feature of a radio terminal according to the present invention is, in the radio communication system according to the aforementioned feature, summarized as follows. The radio terminal further comprises: a measurement unit (measurement unit 121) that measures the first radio quality level, the second radio quality level, and a third radio quality level (RSRP_{eNB}) of a radio signal received by the radio terminal from a neighboring cell (e.g. radio base station end#2) of the radio relay station; and a report transmitter (measurement report generator 122, radio communication unit 110) that transmits a report (Measurement Report) of a measurement result by the measurement unit to the radio relay station, wherein when the amount of change in the first radio quality level is within the predetermined range and when the second radio quality level is better than the predetermined level, the controller controls the report transmitter so that the report transmitter issues the report to the radio relay station after performing correction to lower the third radio quality level relative to the first radio quality level.

Another feature of a radio communication system according to the present invention is, in the radio communication system according to the aforementioned feature, summarized as follows. The system further comprises: a measurement unit (measurement unit 121) that measures the first radio quality level, the second radio quality level, and a third radio quality level (RSRP_{eNB}) for a radio signal received by the radio terminal from a neighboring cell (e.g. radio base station eNB#2) of the radio relay station; and a cell reselector (cell reselector 124) that selects the neighboring cell as a new connection destination of the radio terminal when the third radio quality level is better than the first radio quality level, wherein when the amount of change in the first radio quality level is within the predetermined range and when the second radio quality level is better than the predetermined level, the controller controls the cell reselector so that the cell reselector withholds selection of the neighboring cell as the new connection destination of the radio terminal even though the third radio quality level is better than the first radio quality level.

A feature of a communication control method according to the present invention is summarized as a communication control method using a radio relay station configured to be movable and a radio terminal to be connected to the radio relay station, comprising the step of: after the radio terminal is connected to the radio relay station, performing a control to withhold switching of a connection destination of the radio terminal from the radio relay station when an amount of change in a first radio quality level for a radio signal received by the radio terminal from the radio relay station is within a predetermined range and when a second radio quality level for radio signals received by the radio terminal from a plurality of cells inclusive of the radio relay station is better than a predetermined level.

### BRIEF DESCRIPTION OF THE DRAWINGS

[Fig. 1] Fig. 1 is a view showing a configuration of a radio communication system according to first to fourth embodiments.
[Fig. 2] Fig. 2 is a block diagram showing a configuration of a radio terminal according to the first embodiment.
[Fig. 3] Fig. 3 is a block diagram showing a configuration of a relay node according to the first embodiment.
[Fig. 4] Fig. 4 is an operation sequence diagram for describing operations of the radio communication system according to the first embodiment.
[Fig. 5] Fig. 5 is a block diagram showing a configuration of a radio terminal according to the second and third embodiments.
[Fig. 6] Fig. 6 is an operation sequence diagram for describing operations of the radio communication system according to the second embodiment.
[Fig. 7] Fig. 7 is an operation sequence diagram for describing operations of the radio communication system according to the third embodiment.
[Fig. 8] Fig. 8 is a block diagram showing a configuration of a radio terminal according to the fourth embodiment.

### DESCRIPTION OF THE EMBODIMENTS

First to fourth embodiments as well as other embodiments of the present invention will be described with reference to the accompanying drawings. In the drawings related to the respective embodiments described below, identical or similar constituents will be denoted by identical or similar reference numerals.

### (1) First Embodiment

A first embodiment of the present invention will be described below in the order of (1.1) Schematic Configuration of Radio Communication System, (1.2) Configuration of Radio Terminal UE, 1.3) Configuration of Relay Node RN, (1.4) Operations of Radio Communication System, and (1.5) Operation and Effect of First Embodiment.

### (1.1) Schematic Configuration of Radio Communication System

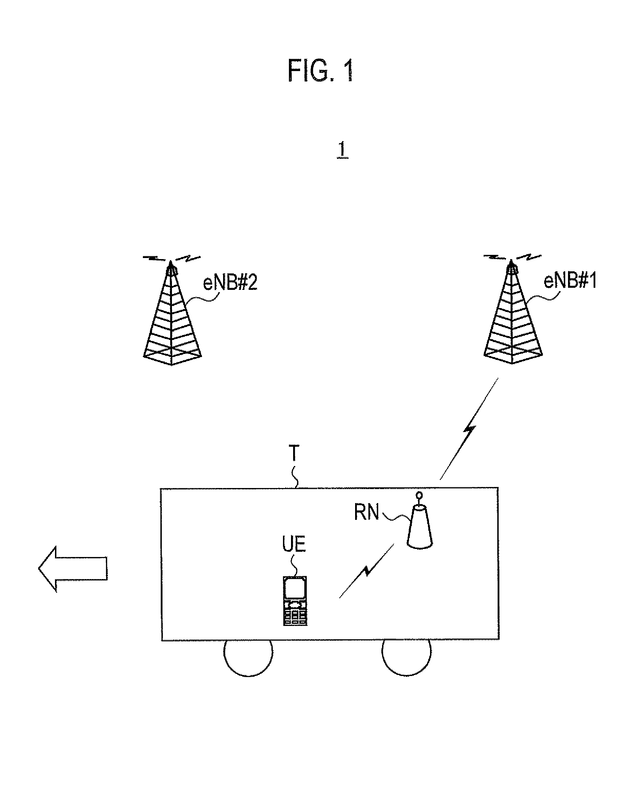

Fig. 1 is a view showing a configuration of a radio communication system 1 according to the first embodiment. The radio communication system 1 is constructed on the basis of the LTE-Advanced, for example, which is positioned as a fourth-generation (4G) cellular telephone system.

As shown in Fig. 1, the radio communication system 1 includes a radio base station eNB#1, a radio base station eNB#2, a relay node RN (a radio relay station) wirelessly connected to the radio base station eNB#1, and a radio terminal UE wirelessly connected to the relay node RN. In the first embodiment, the radio terminal UE is executing communication with a communication destination via the relay node RN and the radio base station eNB#1. Such a state is referred to as an active state (or an RRC connected state).

The radio base station eNB#1 is a macro base station which forms a communication area within a radius of several hundred meters, for example. The radio base station eNB#1 is connected to an unillustrated backhaul network and is capable of performing inter-base-station communication with the radio base station eNB#2 via the backhaul network. The radio base station eNB#1 transmits a reference signal, which is a radio signal composed of a known signal sequence, at predetermined time and frequency. The radio base station eNB#1 functions as a donor base station (DeNB) to which the relay node RN is connected.

The radio base station eNB#2 is another macro base station which forms a communication area within a radius of several hundred meters, for example. The radio base station eNB#2 is connected to the backhaul network and is capable of performing inter-base-station communication with the radio base station eNB#1 via the backhaul network. The radio base station eNB#2 transmits a reference signal, which is a radio signal composed of a known signal sequence, at predetermined time and frequency.

The relay node RN is a small-output relay base station having radio backhaul. The relay node RN is installed in a transportation vehicle T (such as a bus or a train) and moves along with movement of the transportation vehicle T. In short, the relay node RN is configured to be movable.

The relay node RN functions as a radio base station in the light of the radio terminal UE. After the radio terminal UE is connected, the relay node RN relays data to be transmitted and received between the radio terminal UE in the active state and the radio base station eNB#1.

The relay node RN has a higher communication capability than that of the radio terminal UE. Accordingly, when the radio terminal UE is connected to the relay node RN, the radio terminal UE can perform communication in a better condition than the case of establishing connection to the radio base station eNB#1.In addition, the radio terminal UE can perform radio communication with smaller transmission power by establishing connection to the relay node RN and can therefore save battery consumption.

The radio terminal UE is a radio communication device carried by a user and is also referred to as user equipment. In the active state, the radio terminal UE executes handover by switching a connection destination to a cell having a better radio condition than that of a current connection destination cell. The relay node RN as the connection destination cell for the radio terminal UE has a decision right for the handover involving the radio terminal UE. Upon receipt of an instruction for the handover from the relay node RN, the radio terminal UE executes the handover to a cell designated by the relay node RN.

### (1.2) Configuration of Radio Terminal UE

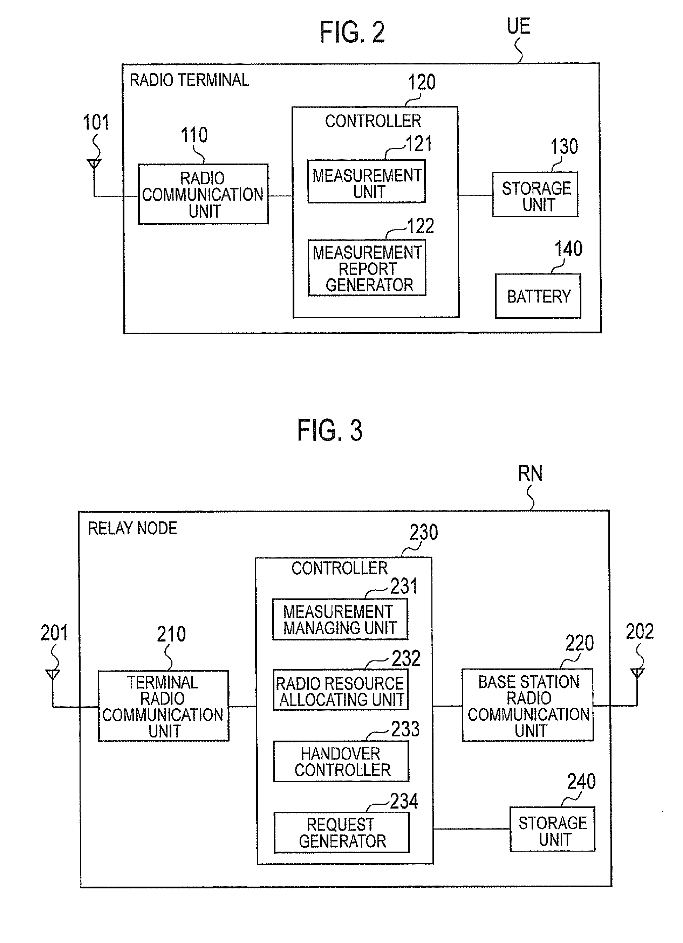

Next, a configuration of the radio terminal UE according to the first embodiment will be described. Fig. 2 is a block diagram showing the configuration of the radio terminal UE according to the first embodiment.

As shown in Fig. 2, the radio terminal UE includes an antenna 101, a radio communication unit 110, a controller 120, and a storage unit 130. In addition, the radio terminal UE includes user interfaces (a display unit, buttons, a microphone, and a speaker), a battery, and the like which are not illustrated therein.

The antenna 101 is used for transmission and reception of radio signals.

The radio communication unit 110 is formed by use of a radio frequency (RF) circuit, a baseband (BB) circuit, and the like and is configured to transmit and receive the radio signals via the antenna 101. In addition, the radio communication unit 110 performs modulation of a transmission signal and demodulation of a reception signal.

The radio communication unit 110 receives reference signals transmitted respectively from the radio base station eNB#1, the radio base station eNB#2, and the relay node RN. Each reference signal includes an identifier (a cell ID) for identifying a sender cell of the reference signal.

The controller 120 is formed by use of a CPU, for example, and controls various functions implemented in the radio terminal UE. The storage unit 130 is formed by use of a memory, for example, and stores a variety of information used for controlling the radio terminal UE, and so forth.

The controller 120 includes a measurement unit 121 and a measurement report generator 122.

The measurement unit 121 measures radio quality levels of radio signals received by the radio communication unit 110. The radio quality levels include RSRP (reference signal received power) and RSRQ (reference signal received quality). The RSRP is a received power level of a reference signal from a specific cell. The RSRQ is a ratio of the reference signal from the specific cell to each of received power levels of reference signals from multiple cells. The measurement unit 121 performs measurement in accordance with measurement control by the relay node RN.

The measurement unit 121 measures the RSRP (hereinafter referred to as RSRP_{RN}) for the radio signal received by the radio communication unit 110 from the relay node RN. The measurement unit 121 also measures the RSRQ (hereinafter referred to as RSRQ_{RN}) for the radio signal received by the radio communication unit 110 from the relay node RN. Further, the measurement unit 121 measures the RSRP (hereinafter referred to as RSRP_{eNB}) for the radio signal received by the radio communication unit 110 from either the radio base station eNB#1 or the radio base station eNB#2. Here, the RSRP_{RN} corresponds to a first radio quality level, the RSRQ_{RN} corresponds to a second radio quality level, and the RSRP_{eNB} corresponds to a third radio quality level.

In the following description, the RSRP_{eNB} is assumed to be the RSRP of the radio signal received by the radio communication unit 110 from the radio base station end#2.

The measurement report generator 122 generates a measurement report which is a report message of a measurement result acquired by the measurement unit 121. The measurement report generated by the measurement report generator 122 is transmitted from the radio communication unit 110 to the relay node RN.

In the first embodiment, the measurement report generator 122 and the radio communication unit 110 collectively constitute a report transmitter configured to transmit the measurement report concerning the RSRP_{RN}, the RSRQ_{RN}, and the RSRP_{eNB} to the relay node RN.

### (1.3) Configuration of Relay Node RN

Next, a configuration of the relay node RN according to the first embodiment will be described. Fig. 3 is a block diagram showing the configuration of the relay node RN according to the first embodiment.

As shown in Fig. 3, the relay node RN includes an antenna 201, an antenna 202, a terminal radio communication unit 210, a base station radio communication unit 220, a controller 230, and a storage unit 240. Here, the relay node RN also includes a power supply unit and the like which are not illustrated therein.

Each of the antennas 201 and 202 is used for transmission and reception of the radio signals.

The terminal radio communication unit 210 is formed by use of a radio frequency (RF) circuit, a baseband (BB) circuit, and the like and is configured to transmit and receive the radio signals to and from the radio terminal UE via the antenna 201. In addition, the terminal radio communication unit 210 performs modulation of a transmission signal and demodulation of a reception signal. Furthermore, the terminal radio communication unit 210 transmits a reference signal, which is a radio signal composed of a known signal sequence, at predetermined time and frequency.

Here, the antennas 201 and 202 may unite into one antenna and the radio communication units 210 may unite into one radio communication unit. In this case, however, a radio resource allocating unit 232 to be described later performs transmission and reception switching.

The terminal radio communication unit 210 receives the measurement report transmitted from the radio terminal UE. In the first embodiment, the terminal radio communication unit 210 corresponds to a report receiver.

The base station radio communication unit 220 is formed by use of a radio frequency (RF) circuit, a baseband (BB) circuit, and the like and is configured to transmit and receive the radio signals to and from the radio base station eNB#1 via the antenna 202. In addition, the base station radio communication unit 220 performs modulation of a transmission signal and demodulation of a reception signal.

The controller 230 is formed by use of a CPU, for example, and controls various functions implemented in the relay node RN. The storage unit 240 is formed by use of a memory, for example, and stores a variety of information used for controlling the relay node RN, and so forth.

The controller 230 includes a measurement managing unit 231, a radio resource allocating unit 232, a handover controller 233, and a request generator 234.

The measurement managing unit 231 manages the measurement conducted by the radio terminal UE. The measurement managing unit 231 has the above-described measurement control function as well as a function to cause the storage unit 240 to store the measurement result acquired by the radio terminal UE. Information on the measurement control by the measurement managing unit 231 is transmitted from the terminal radio communication unit 210 to the radio terminal UE.

The radio resource allocating unit 232 determines radio resources to be allocated to the radio terminal UE. The radio resources are allocated by the slot in terms of a time direction and by the resource block in terms of a frequency direction. Information on the allocated radio resources determined by the radio resource allocating unit 232 is transmitted from the terminal radio communication unit 210 to the radio terminal UE.

The handover controller 233 controls the handover of the radio terminal UE on the basis of the measurement report received by the terminal radio communication unit 210. The handover controller 233 performs comparison between the RSRP_{RN} with the RSRP_{eNB} included in the measurement report, and then makes a decision to cause the radio terminal UE to execute the handover from the relay node RN to the radio base station eNB#2 when the RSRP_{eNB} is better than RSRP_{RN}. Note that the above-mentioned procedure is not limited only to the direct comparison between the RSRP_{RN} and the RSRP_{eNB} included in the measurement report, but the handover controller 233 may also perform the comparison after any one of the RSRP_{RN} and the RSRP_{eNB} is provided with an offset.

When the decision is made to cause the radio terminal UE to execute the handover to the radio base station eNB#2, the request generator 234 generates a handover request addressed to the radio base station eNB#2. The handover request is a message for requesting acceptance of the radio terminal UE. The handover request generated by the request generator 234 is transmitted from the base station radio communication unit 220 to the radio base station eNB#1. In the first embodiment, the request generator 234 and the base station radio communication unit 220 collectively constitute a request transmitter.

When an amount of change in the RSRP_{RN} included in the measurement report is within a predetermined range and when the RSRQ_{RN} included in the measurement report is better than a predetermined level, the handover controller 233 performs such control as to withhold transmission of the handover request even though the RSRP_{eNB} is better than the RSRP_{RN}. In the first embodiment, the handover controller 233 corresponds to a controller that performs such control as to withhold switching of the connection destination of the radio terminal UE from the relay node RN.

The amount of change in the RSRP_{RN} is a difference between the RSRP_{RN} (hereinafter referred to as RSRP¹_{RN}) measured by the radio terminal UE at a first time point and the RSRP_{RN} (hereinafter referred to as RSRP²_{RN}) measured by the radio terminal UE at a second time point later than the first time point. The condition of the RSRQ_{RN} being better than the predetermined level is that the RSRQ_{RN} is higher than the predetermined level (a predetermined threshold).

### (1.4) Operations of Radio Communication System

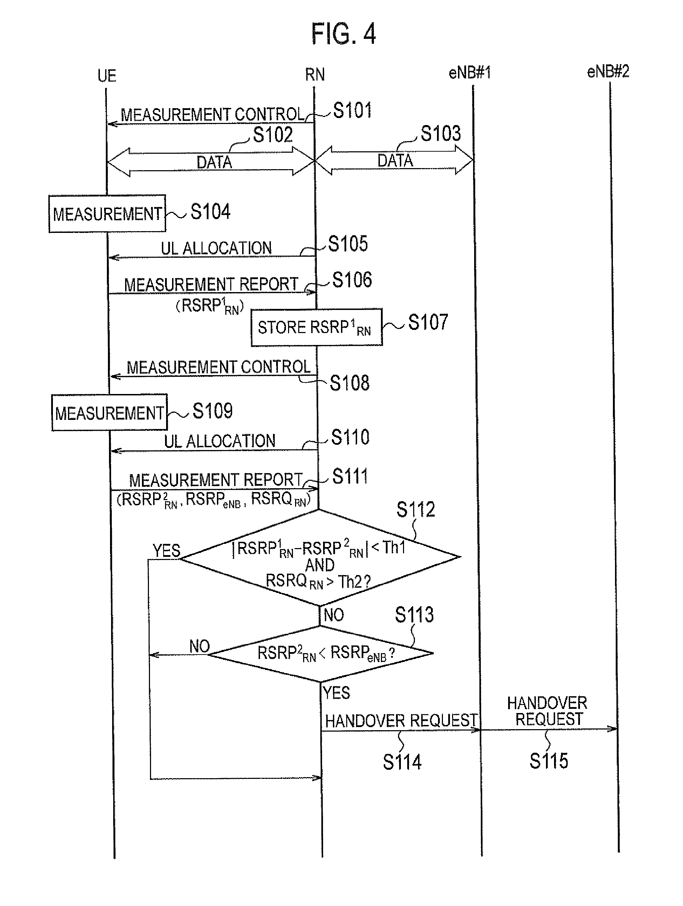

Next, operations of the radio communication system 1 according to the first embodiment will be described. Fig. 4 is an operation sequence diagram for describing the operations of the radio communication system 1 according to the first embodiment.

As shown in Fig. 4, in step S101, the measurement managing unit 231 of the relay node RN generates control information instructing measurement of the RSRP¹_{RN}, and the terminal radio communication unit 210 transmits the control information to the radio terminal UE. The radio communication unit 110 of the radio terminal UE receives the control information.

In steps S102 and S103, the relay node RN relays packet data transmitted and received between the radio base station eNB#1 and the radio terminal UE.

In step S104, the measurement unit 121 of the radio terminal UE measures the RSRP¹_{RN} in accordance with the control information received by the radio communication unit 110.

In step S105, the radio resource allocating unit 232 of the relay node RN allocates uplink (UL) radio resources to the radio terminal UE and generates allocation information (UL allocation). The terminal radio communication unit 210 transmits the allocation information to the radio terminal UE. The radio communication unit 110 of the radio terminal UE receives the allocation information.

In step S106, the measurement report generator 122 of the radio terminal UE generates a measurement report which includes the RSRP¹_{RN} measured by the measurement unit 121. The radio communication unit 110 transmits the measurement report to the relay node RN. The terminal radio communication unit 210 of the relay node RN receives the measurement report.

In step S107, the measurement managing unit 231 of the relay node RN causes the storage unit 240 to store the RSRP¹RN which is included in the measurement report received by the terminal radio communication unit 210.

In step S108, the measurement managing unit 231 of the relay node RN generates control information instructing measurement of the RSRP²_{RN}, the RSRP_{eNB}, and the RSRQ_{RN}. The terminal radio communication unit 210 transmits the control information to the radio terminal UE. The radio communication unit 110 of the radio terminal UE receives the control information.

In step S109, the measurement unit 121 of the radio terminal UE measures the RSRP²_{RN}, the RSRP_{eNB}, and the RSRQ_{RN} in accordance with the control information received by the radio communication unit 110.

In step S110, the radio resource allocating unit 232 of the relay node RN allocates uplink (UL) radio resources to the radio terminal UE and generates allocation information (UL allocation). The terminal radio communication unit 210 transmits the allocation information to the radio terminal UE. The radio communication unit 110 of the radio terminal UE receives the allocation information.

In step S111, the measurement report generator 122 of the radio terminal UE generates a measurement report which includes the RSRP²_{RN}, the RSRP_{eNB}, and the RSRQ_{RN} measured by the measurement unit 121. The radio communication unit 110 transmits the measurement report to the relay node RN. The terminal radio communication unit 210 of the relay node RN receives the measurement report.

In step S112, the handover controller 233 of the relay node RN calculates a difference between the RSRP¹_{RN} stored in the storage unit 240 and the RSRP²_{RN} included in the measurement report received by the terminal radio communication unit 210 in step S111, and checks whether or not the calculated difference is smaller than a threshold Th1. In addition, the handover controller 233 checks whether or not the RSRQ_{RN} included in the measurement report received by the terminal radio communication unit 210 is greater than a threshold Th2. The threshold Th1 and the threshold Th2 are stored in the storage unit 240 in advance.

The processing goes to step S113 if the difference between the RSRP¹_{RN} and the RSRP²_{RN} is greater than the threshold Th1 or if the RSRQ_{RN} is smaller than the threshold Th2. On the other hand, the processing in step S113 is omitted when the difference between the RSRP¹_{RN} and the RSRP²_{RN} is smaller than the threshold Th1 and when the RSRQ_{RN} is greater than the threshold Th2.

In step S113, the handover controller 233 of the relay node RN checks whether or not the RSRP_{eNB} included in the measurement report received by the terminal radio communication unit 210 in step S111 is greater than the RSRP²_{RN}. Note that the above-mentioned procedure is not limited only to the direct comparison between the RSRP²_{RN} and the RSRP_{eNB}, but the handover controller 233 may also perform the comparison after any one of the RSRP²_{RN} and the RSRP_{eNB} is provided with an offset.

If the RSRP_{eNB} is greater than the RSRP²_{RN} (step S113; YES), then in step S114, the request generator 234 of the relay node RN generates a handover request addressed to the radio base station eNB#2, and the base station radio communication unit 220 transmits the handover request to the radio base station eNB#1.The radio base station eNB#1 receives the handover request.

Note that the order of execution of the steps S112 and S113 may be inverted.

In step S115, the radio base station eNB#1 relays the handover request received from the relay node RN further to the radio base station eNB#2.

The radio base station eNB#2 determines appropriateness of acceptance of the radio terminal UE. Then, if the radio terminal UE is acceptable, the radio base station eNB#2 transmits a message of acceptance to the relay node RN. Upon receipt of the message stating that the radio terminal UE is acceptable, the handover controller 233 of the relay node RN transmits an instruction of the handover to the radio base station eNB#2 to the attention of the radio terminal UE. Then, the handover controller 233 forwards data, which are addressed to the radio terminal UE, to the radio base station eNB#2. The radio terminal UE terminates the connection to the relay node RN and establishes connection to the radio base station eNB#2, thereby completing the handover.

### (1.5) Operation and Effect of First Embodiment

As described above, when the amount of change in the RSRP_{RN} is within the predetermined range and when the RSRQ_{RN} is better than the predetermined level after the radio terminal UE is connected to the relay node RN, the relay node RN performs the such control as to withhold switching of the connection destination of the radio terminal UE from the relay node RN even though the RSRP_{eNB} is better than the RSRP_{RN}.

Here, the case when there is no or only a little change in the RSRP_{RN} can be regarded as a situation where a propagation environment between the relay node RN configured to be movable and the radio terminal UE does not change materially, i.e., a situation where the radio terminal UE is moving together with the relay node RN. Meanwhile, the case when the high RSRQ_{RN} is high can be regarded as a situation where the radio terminal UE is performing communication successfully with the relay node RN. Accordingly, when the amount of change in the RSRP_{RN} is within the predetermined range and when the RSRQ_{RN} is better than the predetermined level, the relay node RN performs the such control as to withhold switching of the connection destination of the radio terminal UE from the relay node RN even though the RSRP_{eNB} is better than the RSRP_{RN}. Thus, the relay node RN can suppress occurrence of unnecessary handover.

A handover sequence causes an increase in a traffic load associated with transmission and reception (signaling) of control messages and with data forwarding. In this regard, the traffic load can be reduced by suppressing occurrence of unnecessary handover.

### (2) Second Embodiment

Next, a second embodiment of the present invention will be described below in the order of (2.1) Configuration of Radio Terminal UE, (2.2) Operations of Radio Communication System, and (2.3) Operation and Effect of Second Embodiment. In the following second embodiment, different features from those in the first embodiment will mainly be described and overlapping explanations will be omitted.

### (2.1) Configuration of Radio Terminal UE

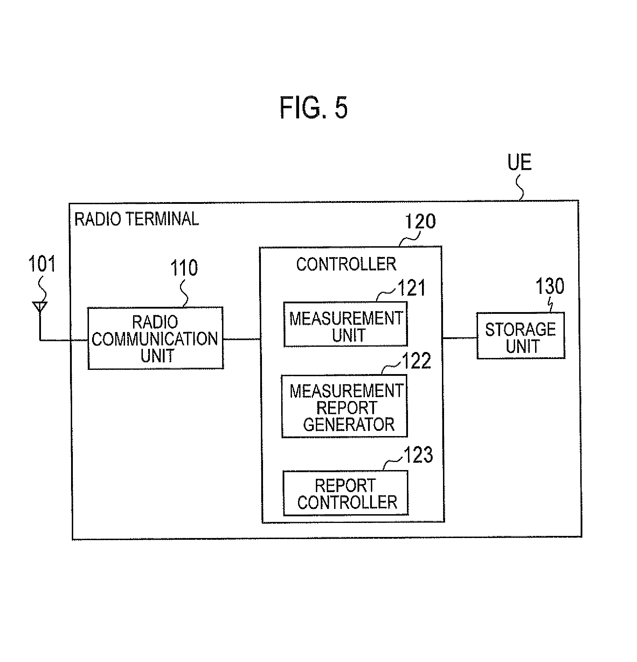

A configuration of the radio terminal UE according to the second embodiment will be described. Fig. 5 is a block diagram showing the configuration of the radio terminal UE according to the second embodiment.

As shown in Fig. 5, the radio terminal UE according to the second embodiment is different from the first embodiment in that the radio terminal UE further includes a report controller 123. When the amount of change in the RSRP_{RN} is within the predetermined range and when the RSRQ_{RN} is better than the predetermined level after the radio terminal UE is connected to the relay node RN, the report controller 123 performs such control as to withhold reporting of the RSRP_{eNB} to the relay node RN even though the RSRP_{eNB} is better than the RSRP_{RN}. In the second embodiment, the report controller 123 corresponds to the controller that performs such control as to withhold switching of the connection destination of the radio terminal UE from the relay node RN.

### (2.2) Operations of Radio Communication System

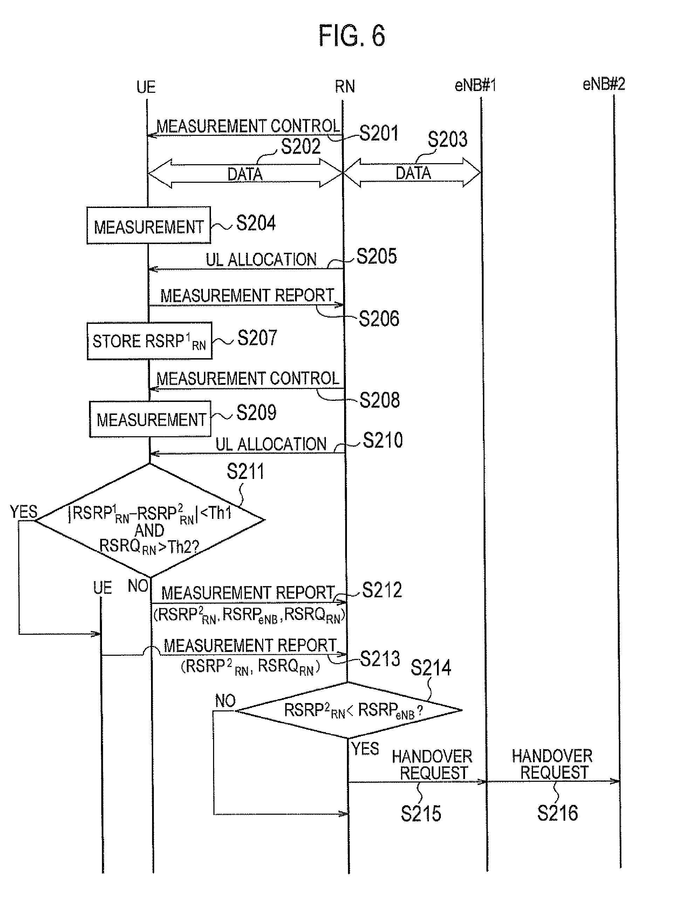

Next, operations of the radio communication system 1 according to the second embodiment will be described. Fig. 6 is an operation sequence diagram for describing the operations of the radio communication system 1 according to the second embodiment.

As shown in Fig. 6, in step S201, the measurement managing unit 231 of the relay node RN generates control information instructing measurement of the RSRP¹_{RN}, and the terminal radio communication unit 210 transmits the control information to the radio terminal UE. The radio communication unit 110 of the radio terminal UE receives the control information.

In steps S202 and S203, the relay node RN relays packet data transmitted and received between the radio base station eNB#1 and the radio terminal UE.

In step S204, the measurement unit 121 of the radio terminal UE measures the RSRP¹_{RN} in accordance with the control information received by the radio communication unit 110.

In step S205, the radio resource allocating unit 232 of the relay node RN allocates uplink (UL) radio resources to the radio terminal UE and generates allocation information (UL allocation). The terminal radio communication unit 210 transmits the allocation information to the radio terminal UE. The radio communication unit 110 of the radio terminal UE receives the allocation information.

In step S206, the measurement report generator 122 of the radio terminal UE generates a measurement report which includes the RSRP¹_{RN} measured by the measurement unit 121. The radio communication unit 110 transmits the measurement report to the relay node RN. The terminal radio communication unit 210 of the relay node RN receives the measurement report.

In step S207, the storage unit 130 of the radio terminal UE stores the RSRP¹_{RN} measured by the measurement unit 121.

In step S208, the measurement managing unit 231 of the relay node RN generates control information instructing measurement of the RSRP²_{RN}, the RSRP_{eNB}, and the RSRQ_{RN}. The terminal radio communication unit 210 transmits the control information to the radio terminal UE. The radio communication unit 110 of the radio terminal UE receives the control information.

In step S209, the measurement unit 121 of the radio terminal UE measures the RSRP²_{RN}, the RSRP_{eNB}, and the RSRQ_{RN} in accordance with the control information received by the radio communication unit 110.

In step S210, the radio resource allocating unit 232 of the relay node RN allocates uplink (UL) radio resources to the radio terminal UE and generates allocation information (UL allocation). The terminal radio communication unit 210 transmits the allocation information to the radio terminal UE. The radio communication unit 110 of the radio terminal UE receives the allocation information.

In step S211, the report controller 123 of the radio terminal UE calculates a difference between the RSRP¹_{RN} stored in the storage unit 130 and the RSRP²_{RN} measured by the measurement unit 121 in step S209, and checks whether or not the calculated difference is smaller than a threshold Th1. In addition, the report controller 123 checks whether or not the RSRQ_{RN} measured by the measurement unit 121 is greater than a threshold Th2. The threshold Th1 and the threshold Th2 are stored in the storage unit 130 in advance.

The processing goes to step S212 if the difference between the RSRP¹_{RN} and the RSRP²_{RN} is greater than the threshold Th1 or if the RSRQ_{RN} is smaller than the threshold Th2. On the other hand, the processing goes to step S213 when the difference between the RSRP¹_{RN} and the RSRP²_{RN} is smaller than the threshold Th1 and when the RSRQ_{RN} is greater than the threshold Th2.

In step S212, the measurement report generator 122 of the radio terminal UE generates a measurement report which includes the RSRP²_{RN}, the RSRP_{eNB}, and the RSRQ_{RN} measured by the measurement unit 121. The radio communication unit 110 transmits the measurement report to the relay node RN. The terminal radio communication unit 210 of the relay node RN receives the measurement report.

Alternatively, in step S213, the report controller 123 of the radio terminal UE controls the measurement report generator 122 in such a manner as to generate a measurement report while excluding the RSRP_{eNB} from the RSRP²_{RN}, the RSRP_{eNB}, and the RSRQ_{RN} measured by the measurement unit 121. The radio communication unit 110 transmits the measurement report to the relay node RN. The terminal radio communication unit 210 of the relay node RN receives the measurement report.

In step S214, the handover controller 233 of the relay node RN checks whether or not the RSRP_{eNB} included in the measurement report received by the terminal radio communication unit 210 in step S212 is greater than the RSRP²_{RN}. Note that the above-mentioned procedure is not limited only to the direct comparison between the RSRP²_{RN} and the RSRP_{eNB}, but the handover controller 233 may also perform the comparison after any one of the RSRP²_{RN} and the RSRP_{eNB} is provided with an offset. The processing in step S214 is omitted if the RSRP_{eNB} is excluded from the measurement report (i.e., when step S211; YES).

If the RSRP_{eNB} is greater than the RSRP²_{RN} (step S214; YES), then in step S215, the request generator 234 of the relay node RN generates a handover request addressed to the radio base station eNB#2, and the base station radio communication unit 220 transmits the handover request to the radio base station eNB#1. The radio base station eNB#1 receives the handover request.

In step S216, the radio base station eNB#1 relays the handover request received from the relay node RN further to the radio base station eNB#2.

The radio base station eNB#2 determines appropriateness of acceptance of the radio terminal UE. Then, if the radio terminal UE is acceptable, the radio base station eNB#2 transmits a message of acceptance to the relay node RN. Upon receipt of the message stating that the radio terminal UE is acceptable, the handover controller 233 of the relay node RN transmits an instruction of the handover to the radio base station eNB#2 to the attention of the radio terminal UE. Then, the handover controller 233 forwards data, which are addressed to the radio terminal UE, to the radio base station eNB#2. The radio terminal UE terminates the connection to the relay node RN and establishes connection to the radio base station eNB#2, thereby completing the handover.

### (2.3) Operation and Effect of Second Embodiment

As described above, according to the second embodiment, when the amount of change in the RSRP_{RN} is within the predetermined range and when the RSRQ_{RN} is better than the predetermined level after the radio terminal UE is connected to the relay node RN, the radio terminal UE withholds reporting of the RSRP_{eNB} to the relay node RN even though the RSRP_{eNB} is better than the RSRP_{RN}. Thus, it is possible to suppress occurrence of unnecessary handover in the situation where the radio terminal UE is regarded as moving together with the relay node RN.

### (3) Third Embodiment

A third embodiment of the present invention will be described below in the order of (3.1) Configuration of Radio Terminal UE, (3.2) Operations of Radio Communication System, and (3.3) Operation and Effect of Third Embodiment. In the following third embodiment, different features from those in the first embodiment will mainly be described and overlapping explanations will be omitted.

### (3.1) Configuration of Radio Terminal UE

A configuration of the radio terminal UE according to the third embodiment will be described by using Fig. 5 again.

As shown in Fig. 5, the radio terminal UE according to the third embodiment is different from the first embodiment in that the radio terminal UE further includes the report controller 123.

When the amount of change in the RSRP_{RN} is within the predetermined range and when the RSRQ_{RN} is better than the predetermined level after the radio terminal UE is connected to the relay node RN, the report controller 123 according to the third embodiment performs such control as to issue a report to the relay node RN after performing correction to lower the RSRP_{eNB} relative to the RSRP_{RN}. In the third embodiment, the report controller 123 corresponds to the controller that performs such control as to withhold switching of the connection destination of the radio terminal UE from the relay node RN.

Here, the correction to lower the RSRP_{eNB} relative to the RSRP_{RN} means at least any one of correction of the RSRP_{RN} in such a manner as to increase the RSRP_{RN} and correction of the RSRP_{eNB} in such a manner as to reduce the RSRP_{eNB}.

The following description will be given of the case where the report controller 123 performs correction of the RSRP_{eNB} in such a manner as to reduce the RSRP_{eNB}.

### (3.2) Operations of Radio Communication System

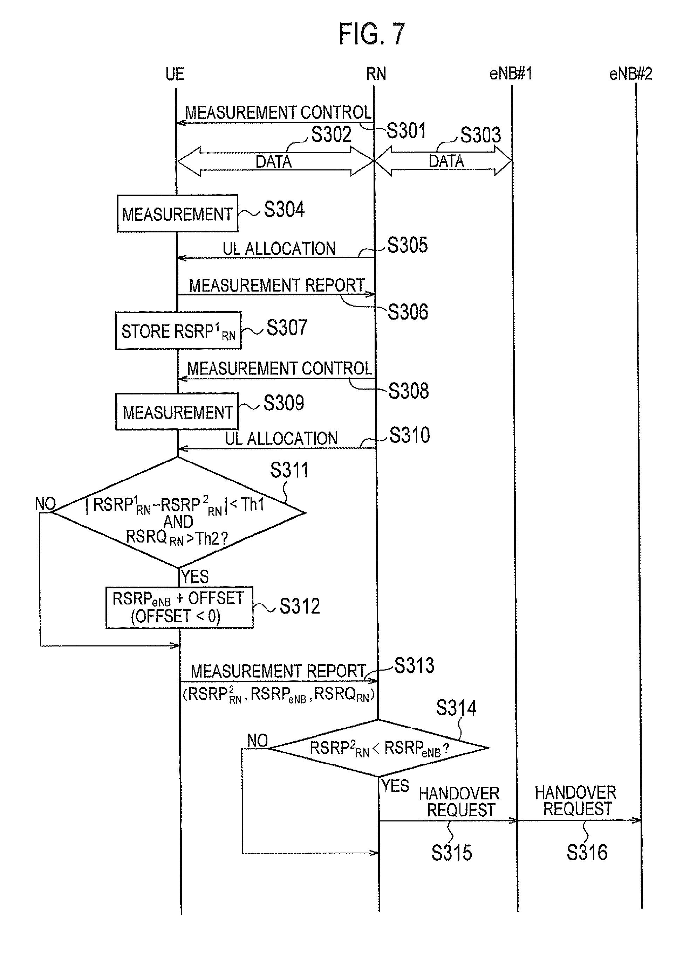

Next, operations of the radio communication system 1 according to the third embodiment will be described. Fig. 7 is an operation sequence diagram for describing the operations of the radio communication system 1 according to the third embodiment.

As shown in Fig. 7, in step S301, the measurement managing unit 231 of the relay node RN generates control information instructing measurement of the RSRP¹_{RN}, and the terminal radio communication unit 210 transmits the control information to the radio terminal UE. The radio communication unit 110 of the radio terminal UE receives the control information.

In steps S302 and S303, the relay node RN relays packet data transmitted and received between the radio base station eNB#1 and the radio terminal UE.

In step S304, the measurement unit 121 of the radio terminal UE measures the RSRP¹_{RN} in accordance with the control information received by the radio communication unit 110.

In step S305, the radio resource allocating unit 232 of the relay node RN allocates uplink (UL) radio resources to the radio terminal UE and generates allocation information (UL allocation). The terminal radio communication unit 210 transmits the allocation information to the radio terminal UE. The radio communication unit 110 of the radio terminal UE receives the allocation information.

In step S306, the measurement report generator 122 of the radio terminal UE generates a measurement report which includes the RSRP¹_{RN} measured by the measurement unit 121. The radio communication unit 110 transmits the measurement report to the relay node RN. The terminal radio communication unit 210 of the relay node RN receives the measurement report.

In step S307, the storage unit 130 of the radio terminal UE stores the RSRP¹_{RN} measured by the measurement unit 121.

In step S308, the measurement managing unit 231 of the relay node RN generates control information instructing measurement of the RSRP²_{RN}, the RSRP_{eNB}, and the RSRQ_{RN}. The terminal radio communication unit 210 transmits the control information to the radio terminal UE. The radio communication unit 110 of the radio terminal UE receives the control information.

In step S309, the measurement unit 121 of the radio terminal UE measures the RSRP²_{RN}, the RSRP_{eNB}, and the RSRQ_{RN} in accordance with the control information received by the radio communication unit 110.

In step S310, the radio resource allocating unit 232 of the relay node RN allocates uplink (UL) radio resources to the radio terminal UE and generates allocation information (UL allocation). The terminal radio communication unit 210 transmits the allocation information to the radio terminal UE. The radio communication unit 110 of the radio terminal UE receives the allocation information.

In step S311, the measurement report controller 123 of the radio terminal UE calculates a difference between the RSRP¹_{RN} stored in the storage unit 130 and the RSRP²_{RN} measured by the measurement unit 121 in step S309, and checks whether or not the calculated difference is smaller than a threshold Th1. In addition, the report controller 123 checks whether or not the RSRQ_{RN} measured by the measurement unit 121 is greater than a threshold Th2. The threshold Th1 and the threshold Th2 are stored in the storage unit 130 in advance.

The processing goes to step S313 if the difference between the RSRP¹_{RN} and the RSRP²_{RN} is greater than the threshold Th1 or if the RSRQ_{RN} is smaller than the threshold Th2. On the other hand, the processing goes to step S312 when the difference between the RSRP¹_{RN} and the RSRP²_{RN} is smaller than the threshold Th1 and when the RSRQ_{RN} is greater than the threshold Th2.

In step S312, the report controller 123 of the radio terminal UE corrects the RSRP_{eNB} measured by the measurement unit 121 in such a manner as to reduce the RSRP_{eNB}. To be more precise, the report controller 123 adds a predetermined negative offset value to the RSRP_{eNB}.

In step S313, the measurement report generator 122 generates a measurement report which includes the RSRP²_{RN}, the RSRP_{eNB}, and the RSRQ_{RN} measured by the measurement unit 121. The radio communication unit 110 transmits the measurement report to the relay node RN. Here, if the RSRP_{eNB} is corrected by the report controller 123, the measurement report generator 122 generates the measurement report which includes the RSRP²_{RN}, the RSRQ_{RN}, and the corrected RSRP_{eNB}.

The terminal radio communication unit 210 of the relay node RN receives the measurement report transmitted from the radio terminal UE.

In step S314, the handover controller 233 of the relay node RN checks whether or not the RSRP_{eNB} included in the measurement report received by the terminal radio communication unit 210 in step S312 is greater than the RSRP²_{RN}. Note that the above-mentioned procedure is not limited only to the direct comparison between the RSRP²_{RN} and the RSRP_{eNB}, but the handover controller 233 may also perform the comparison after any one of the RSRP²_{RN} and the RSRP_{eNB} is provided with an offset.

If the RSRP_{eNB} is greater than the RSRP²_{RN} (step S314; YES), then in step S315, the request generator 234 of the relay node RN generates a handover request addressed to the radio base station eNB#2, and the base station radio communication unit 220 transmits the handover request to the radio base station eNB#1.The radio base station eNB#1 receives the handover request.

In step S316, the radio base station eNB#1 relays the handover request received from the relay node RN further to the radio base station eNB#2.

The radio base station eNB#2 determines appropriateness of acceptance of the radio terminal UE. Then, if the radio terminal UE is acceptable, the radio base station eNB#2 transmits a message of acceptance to the relay node RN. Upon receipt of the message stating that the radio terminal UE is acceptable, the handover controller 233 of the relay node RN transmits an instruction of the handover to the radio base station eNB#2 to the attention of the radio terminal UE. Then, the handover controller 233 forwards data, which are addressed to the radio terminal UE, to the radio base station eNB#2. The radio terminal UE terminates the connection to the relay node RN and establishes connection to the radio base station eNB#2, thereby completing the handover.

### (3.3) Operation and Effect of Third Embodiment

As described above, according to the third embodiment, when the amount of change in the RSRP_{RN} is within the predetermined range and when the RSRQ_{RN} is better than the predetermined level after the radio terminal UE is connected to the relay node RN, the radio terminal UE reports the RSRP_{eNB} after correcting the RSRP_{eNB} in a reducing manner. Thus, it is possible to suppress occurrence of unnecessary handover in the situation where the radio terminal UE is regarded as moving together with the relay node RN.

### (4) Fourth Embodiment

A fourth embodiment of the present invention will be described below in the order of (4.1) Configuration of Radio Terminal UE and (4.2) Operation and Effect of Fourth Embodiment. In the following fourth embodiment, different features from those in the first embodiment will mainly be described and overlapping explanations will be omitted.

While the first to third embodiments have been described concerning the handover, the fourth embodiment will describe cell reselection which is processing for causing the radio terminal UE to switch (reselect) a serving cell.

### (4.1) Configuration of Radio Terminal UE

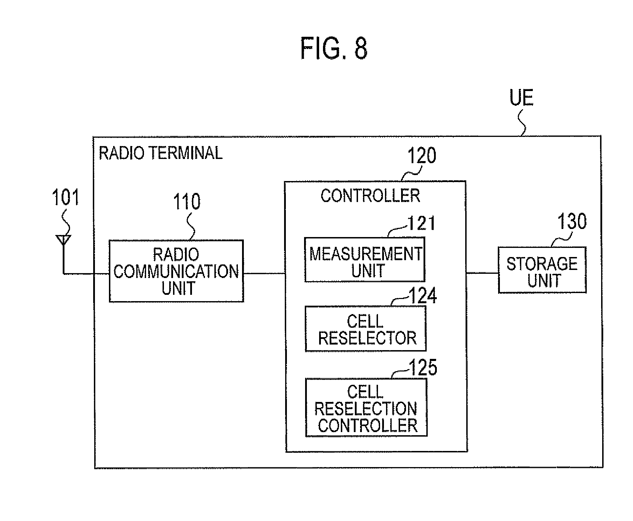

A configuration of the radio terminal UE according to the fourth embodiment will be described. Fig. 8 is a block diagram showing the configuration of the radio terminal UE according to the fourth embodiment.

As shown in Fig. 8, the radio terminal UE according to the fourth embodiment is different from the first embodiment in that the radio terminal UE further includes a cell reselector 124 and a cell reselection controller 125.

After connection to the relay node RN is established in the idle state, namely, after the relay node RN is selected as the serving cell, the measurement unit 121 measures the RSRP_{RN}, the RSRQ_{RN}, and the RSRP_{eNB}.

The cell reselector 124 compares the RSRP_{RN} with the RSRP_{eNB}, and selects the radio base station eNB#2 as a new connection destination (serving cell) for the terminal when the RSRP_{eNB} is better than the RSRP_{RN}.

The cell reselection controller 125 calculates a difference between the RSRP¹_{RN} stored in the storage unit 130 and the RSRP²_{RN} newly measured by the measurement unit 121, and checks whether or not the calculated difference is smaller than a threshold Th1. In addition, the cell reselection controller 125 checks whether or not the RSRQ_{RN} measured by the measurement unit 121 is greater than a threshold Th2. The threshold Th1 and the threshold Th2 are stored in the storage unit 130 in advance.

When the amount of change (difference) in the RSRP_{RN} is smaller than the threshold Th1 and when the RSRQ_{RN} is higher than the threshold Th2, the cell reselection controller 125 controls the cell reselector 124 in such a manner as to withhold selection of the radio base station eNB#2 as the new connection destination of the radio terminal even though the RSRP_{eNB} is higher than the RSRP_{RN}. In the fourth embodiment, the cell reselection controller 125 corresponds to the controller that performs such control as to withhold switching of the connection destination of the radio terminal UE from the relay node RN.

### (4.2) Operation and Effect of Fourth Embodiment

As described above, according to the fourth embodiment, when the amount of change in the RSRP_{RN} is within the predetermined range and when the RSRQ_{RN} is better than the predetermined level after the relay node RN is selected as the serving cell, the radio terminal UE controls the cell reselector 124 in such a manner as to withhold selection of the radio base station eNB#2 as the new connection destination of the radio terminal even though the RSRP_{eNB} is better than the RSRP_{RN}. Thus, it is possible to suppress occurrence of unnecessary cell reselection in the situation where the radio terminal UE is regarded as moving together with the relay node RN.

### (5) Other Embodiments

Although the present invention has been described above with reference to certain embodiments, it should not be understood that the descriptions and the drawings constituting part of this disclosure limit the present invention. Various alternative embodiments, examples, and operation techniques become apparent to those skilled in the art from this disclosure.

For example, the RSRQ_{RN} used in the above-described embodiments shows a ratio of a desired signal to an interference noise signal. Here, a reception power level of such an interference noise signal may be used instead of the RSRQ_{RN} as the second radio quality level. The interference noise signal means a radio signal received by the radio terminal UE from a cell other than the relay node RN. In this case, the condition of the second radio quality level being better than the predetermined level is that the interference noise signal is lower than a threshold.

The above-described first to fourth embodiments do not always have to be carried out independently. One or more of the embodiments may be carried out in combination when appropriate.

Each of the above-described embodiments has exemplified the radio communication system based on the LTE-Advanced. However, the present invention is applicable not only to the LTE-Advanced but also to a different radio communication system as long as the system adopts a radio relay station configured to be movable. Accordingly, the present invention is also applicable to other radio communication systems such as a radio communication system based on the mobile WiMAX (IEEE 802.16e).

As described above, it is to be understood that the present invention encompasses various embodiments and the like which are not described herein. The present invention is therefore to be defined only by the matters specifying the invention within the scope of the claims which is appropriate from this disclosure.

It should also be noted that the entire contents of Japanese Patent Application No. 2010-163413 (filed July 20, 2010) are incorporated herein by reference.

### INDUSTRIAL APPLICABILITY

As described above, a radio communication system, a radio relay station, a radio terminal, and a communication control method according to the present invention can suppress occurrence of unnecessary processing for switching a connection destination, and are therefore useful in radio communications including mobile telecommunications and so forth.

## Claims

1. A radio communication system provided with a radio relay station configured to be movable, and a radio terminal to be connected to the radio relay station, the system comprising:
a controller that, after the radio terminal is connected to the radio relay station, performs control to withhold switching of a connection destination of the radio terminal from the radio relay station when an amount of change in a first radio quality level for a radio signal received by the radio terminal from the radio relay station is within a predetermined range and when a second radio quality level for radio signals received by the radio terminal from a plurality of cells inclusive of the radio relay station is better than a predetermined level.

2. The radio communication system according to claim 1, wherein
the radio terminal comprises:
a measurement unit that measures the first radio quality level, the second radio quality level, and a third radio quality level for a radio signal received by the radio terminal from a neighboring cell of the radio relay station; and
a report transmitter that transmits a report of a measurement result by the measurement unit to the radio relay station,
the radio relay station comprises:
a report receiver that receives the report of the measurement result from the radio terminal;
a request transmitter that transmits, to the neighboring cell, a request message for changing the connection destination of the radio terminal when the third radio quality level is better than the first radio quality level; and
the controller, wherein
when the amount of change in the first radio quality level is within the predetermined range and when the second radio quality level is better than the predetermined level, the controller controls the request transmitter so that the request transmitter withholds transmission of the request message even though the third radio quality level is better than the first radio quality level.

3. The radio communication system according to claim 1, wherein
the radio terminal comprises:
a measurement unit that measures the first radio quality level, the second radio quality level, and a third radio quality level for a radio signal received by the radio terminal from a neighboring cell of the radio relay station;
a report transmitter that transmits a report of a measurement result by the measurement unit to the radio relay station; and
the controller,
the radio relay station comprises:
a report receiver that receives the report of the measurement result from the radio terminal; and
a request transmitter that transmits, to the neighboring cell, a request message for changing the connection destination of the radio terminal when the third radio quality level is better than the first radio quality level, wherein
when the amount of change in the first radio quality level is within the predetermined range and when the second radio quality level is better than the predetermined level, the controller controls the report transmitter so that the report transmitter withholds reporting of the third radio quality level to the radio relay station.

4. The radio communication system according to claim 1, wherein
the radio terminal comprises:
a measurement unit that measures the first radio quality level, the second radio quality level, and a third radio quality level for a radio signal received by the radio terminal from a neighboring cell of the radio relay station;
a report transmitter that transmits a report of a measurement result by the measurement unit to the radio relay station; and
the controller,
the radio relay station comprises:
a report receiver that receives the report of the measurement result from the radio terminal; and
a request transmitter that transmits, to the neighboring cell, a request message for changing the connection destination of the radio terminal when the third radio quality level is better than the first radio quality level, wherein
when the amount of change in the first radio quality level is within the predetermined range and when the second radio quality level is better than the predetermined level, the controller controls the report transmitter so that the report transmitter issues the report to the radio relay station after performing correction to lower the third radio quality level relative to the first radio quality level.

5. The radio communication system according to claim 1, wherein
the radio terminal comprises:
a measurement unit that measures the first radio quality level, the second radio quality level, and a third radio quality level for a radio signal received by the radio terminal from a neighboring cell of the radio relay station;
a cell reselector that selects the neighboring cell as a new connection destination of the radio terminal when the third radio quality level is better than the first radio quality level; and
the controller, wherein
when the amount of change in the first radio quality level is within the predetermined range and when the second radio quality level is better than the predetermined level, the controller controls the cell reselector so that the cell reselector withholds selection of the neighboring cell as the new connection destination of the radio terminal even though the third radio quality level is better than the first radio quality level.

6. The radio communication system according to claim 1, wherein
the first radio quality level is a reception power level of the radio signal received by the radio terminal from the radio relay station, and
the amount of change in the first radio quality level is a difference between the first radio quality level measured by the measurement unit at a first time point and the first radio quality level measured by the measurement unit at a second time point later than the first time point.

7. The radio communication system according to claim 1, wherein
the second radio quality level is a ratio of a reception power level of the radio signal received by the radio terminal from the radio relay station to a reception power level of a radio signal received by the radio terminal from a neighboring cell of the radio relay station, and
a condition of the second radio quality level being better than the predetermined level is that the second radio quality level is higher than the predetermine level.

8. The radio communication system according to claim 1, wherein
the second radio quality level is an interference noise power level indicating reception power of a radio signal received by the radio terminal from a neighboring cell of the radio relay station, and
a condition of the second radio quality level being better than the predetermined level is that the second radio quality level is lower than the predetermine level.

9. A radio relay station configured to be movable, comprising:
a controller that, after a radio terminal is connected to the radio relay station, performs control to withhold switching of a connection destination of the radio terminal from the radio relay station when an amount of change in a first radio quality level for a radio signal received by the radio terminal from the station is within a predetermined range and when a second radio quality level for radio signals received by the radio terminal from a plurality of cells inclusive of the station is better than a predetermined level.

10. The radio relay station according to claim 9, further comprising:
a report receiver that receives a report from the radio terminal, the report including the first radio quality level, the second radio quality level, and a third radio quality level for a radio signal received by the radio terminal from a neighboring cell of the station; and
a request transmitter that transmits, to the neighboring cell, a request message for changing the connection destination of the radio terminal when the third radio quality level is better than the first radio quality level, wherein
when the amount of change in the first radio quality level is within the predetermined range and when the second radio quality level is better than the predetermined level, the controller controls the request transmitter so that the request transmitter withholds transmission of the request message even though the third radio quality level is better than the first radio quality level.

11. A radio terminal to be connected to a radio relay station configured to be movable, comprising:
a controller that, after the radio terminal is connected to the radio relay station, performs control to withhold switching of a connection destination of the radio terminal from the radio relay station when an amount of change in a first radio quality level for a radio signal received by the radio terminal from the radio relay station is within a predetermined range and when a second radio quality level for radio signals received by the radio terminal from a plurality of cells inclusive of the radio relay station is better than a predetermined level.

12. The radio terminal according to claim 11, further comprising:
a measurement unit that measures the first radio quality level, the second radio quality level, and a third radio quality level for a radio signal received by the radio terminal from a neighboring cell of the radio relay station; and
a report transmitter that transmits a report of a measurement result by the measurement unit to the radio relay station, wherein
when the amount of change in the first radio quality level is within the predetermined range and when the second radio quality level is better than the predetermined level, the controller controls the report transmitter so that the report transmitter withholds reporting of the third radio quality level to the radio relay station.

13. The radio terminal according to claim 11, further comprising:
a measurement unit that measures the first radio quality level, the second radio quality level, and a third radio quality level of a radio signal received by the radio terminal from a neighboring cell of the radio relay station; and
a report transmitter that transmits a report of a measurement result by the measurement unit to the radio relay station, wherein
when the amount of change in the first radio quality level is within the predetermined range and when the second radio quality level is better than the predetermined level, the controller controls the report transmitter so that the report transmitter issues the report to the radio relay station after performing correction to lower the third radio quality level relative to the first radio quality level.

14. The radio terminal according to claim 11, further comprising:
a measurement unit that measures the first radio quality level, the second radio quality level, and a third radio qualitylevel for a radio signal received by the radio terminal from a neighboring cell of the radio relay station; and
a cell reselector that selects the neighboring cell as a new connection destination of the radio terminal when the third radio quality level is better than the first radio quality level, wherein
when the amount of change in the first radio quality level is within the predetermined range and when the second radio quality level is better than the predetermined level, the controller controls the cell reselector so that the cell reselector withholds selection of the neighboring cell as the new connection destination of the radio terminal even though the third radio quality level is better than the first radio quality level.

15. A communication control method using a radio relay station configured to be movable and a radio terminal to be connected to the radio relay station, comprising the step of:
after the radio terminal is connected to the radio relay station, performing a control to withhold switching of a connection destination of the radio terminal from the radio relay station when an amount of change in a first radio quality level for a radio signal received by the radio terminal from the radio relay station is within a predetermined range and when a second radio quality level for radio signals received by the radio terminal from a plurality of cells inclusive of the radio relay station is better than a predetermined level.
